(19) Europäisches Patentamt
European Patent Office
Office européen des brevets

(11) **EP 1 317 161 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(51) Int Cl.:
***H04Q 7/38*** (2006.01)

(21) Anmeldenummer: **02360321.0**

(22) Anmeldetag: **22.11.2002**

(54) **Verfahren zur Bestimmung der Entfernung zwischen einer Mobilstation und einer Basisstation**

Method for determining the distance between a mobile station and a base station

Procédé pour déterminer la distance entre un station mobile et un station de base

(84) Benannte Vertragsstaaten:
**AT BE BG CH CY CZ DE DK EE ES FI FR GB GR IE IT LI LU MC NL PT SE SK TR**

(30) Priorität: **01.12.2001 DE 10159086**

(43) Veröffentlichungstag der Anmeldung:
**04.06.2003 Patentblatt 2003/23**

(73) Patentinhaber: **Alcatel Lucent**
**75008 Paris (FR)**

(72) Erfinder:
• **Köhler, Günter**
**73230 Kirchheim (DE)**
• **Nikolai, Dirk, Dr.**
**70439 Stuttgart (DE)**
• **Tangemann, Michael, Dr.**
**71229 Leonberg (DE)**

(74) Vertreter: **Schultenkämper, Johannes et al**
**Alcatel,**
**Intellectual Property Department,**
**Stuttgart**
**70430 Stuttgart (DE)**

(56) Entgegenhaltungen:
**WO-A-99/39539**

• **YOST G P ET AL: "Improvement in Estimation of Time of Arrival (TOA) from Timing Advance (TA)" INTERNATIONAL CONFERENCE ON UNIVERSAL PERSONAL COMMUNICATIONS, IEEE, NEW YORK, NY, US, Bd. 2, Nr. 2, 5. Oktober 1998 (1998-10-05), Seiten 1367-1372, XP002102731**

**Beschreibung**

Die Erfindung betrifft ein Verfahren zur Bestimmung der Entfernung zwischen einer Basisstation und einer Mobilstation.

Die Bestimmung der Position einer Mobilstation (mobile station) eines Mobilfunknetzes (mobile radio network) und damit der Aufenthalt des Benutzers der Mobilstation kann durch verschiedene standardisierte Verfahren, wie z.B. Zell-Identität, Laufzeitmessung, GPS-unterstützt etc. erfolgen. Mit den verschiedenen Verfahren sind grundsätzlich unterschiedliche Genauigkeiten der Positionsbestimmung zu erzielen. Die Genauigkeiten können von einer geeigneten Vor- oder Nachbehandlung der ermittelten Werte sowie von der aktuellen Funkkanalsituation abhängen.

Der sogenannte Timing Advance Wert einer Funkverbindung zwischen einer Mobilstation und einer Basisstation (base station) des Mobilfunknetzes wird bestimmt, um der Mobilstation mitzuteilen, zu welchem Zeitpunkt sie mit dem Senden ihres Zeitschlitzes (burst) beginnen soll. Dadurch wird sicher gestellt, dass der Zeitschlitz unabhängig von der Entfernung zwischen Mobilstation und Basisstation bzw. unabhängig von der Signallaufzeit zwischen den Stationen rechtzeitig an der Basisstation ankommt. Der Timing Advance Wert stellt somit eine Laufzeitkompensation dar.

Aus dem Timing Advance Wert kann auf die Entfernung zwischen Mobilstation und Basisstation geschlossen werden. Der ermittelte Timing Advance Wert ist im Stand der Technik im heutigen Global System for Mobile Communications (GSM)-System ganzzahlig und kann Werte zwischen 0 und 63 annehmen, wobei die Schrittweite bei einer Symboldauer von 3,7 $\mu$s und einer Ausbreitungsgeschwindigkeit von 300000 km/s einer Distanz von etwa 554 m entspricht.

Ändert sich die Entfernung der Mobilstation zur Basisstation, so muss der Timing Advance Wert angepasst werden. Dazu empfängt ein Empfänger in der Basisstation Signale von der Mobilstation und bestimmt für jeden empfangenen Zeitschlitz einen sogenannten Time of Arrival Wert. Der Time of Arrival Wert ist ein relativer zeitlicher Wert, der die Position einer bekannten Trainingssequenz innerhalb des Zeitschlitzes angibt. Dazu wird die empfangene Trainingssequenz (eine der Mobilstation bekannte binäre Bitfolge) mit der idealen Sequenz verglichen (z.B. durch Korrelation). Dies liefert die sogenannte Kanalimpulsantwort (CIR). Der Time of Arrival Wert wird beispielsweise als derjenige Abtastzeitpunkt bestimmt, an dem die Kanalimpulsantwort ein Maximum hat. Im GSM-System kann der Time of Arrival Wert ganzzahlige positive und negative Werte annehmen, wobei die Quantisierung der Dauer eines übertragenen Symbols entspricht. Innerhalb einer sogenannten Measurement Reporting Time werden alle Time of Arrival Werte gesammelt und anschließend gefiltert. Der gefilterte Time of Arrival Wert wird auf eine ganze Zahl gerundet. Weicht dieser gerundete Wert von einem Sollwert, z.B.

0 ab, z.B. weil sich die Entfernung zwischen Mobilstation und Basisstation ändert, wird der Timing Advance Wert je nach Abweichung um den gerundeten Time of Arrival Wert in- oder dekrementiert. Der neue Timing Advance Wert wird über die Luftschnittstelle der Mobilstation mitgeteilt. Die Mobilstation korrigiert ihren Sendezeitpunkt daraufhin entsprechend. Dies führt dazu, dass während der nächsten Measurement Reporting Time der gerundete Time of Arrival Wert wieder den gewünschten Sollwert, z.B. 0, erreicht. Mit dem bekannten Verfahren kann eine Entfernungsbestimmung nur auf etwa 554 Meter genau durchgeführt werden. Aus einem Timing Advance Wert von 0 kann geschlossen werden, dass sich die Mobilstation in einer Entfernung zwischen 0 m und 554 m von der Basisstation befindet, aus einem Timing Advance Wert von 1 kann geschlossen werden, dass sich die Mobilstation in einer Entfernung zwischen 555 m und 1108 m von der Basisstation befindet.

In WO 99/39539 A1 wird die Bestimmung der Entfernung zwischen einer Basisstation und einer Mobilstation eines Mobilfunknetzes unter Verwendung von zwei oder mehr TA-Werten und einer Mittelwertbildung der TA-Werte beschrieben.

Aufgabe der vorliegenden Erfindung ist es daher, ein auf der Laufzeitkompensation basierendes Verfahren zu entwickeln, mit dem die Genauigkeit der Entfernungsbestimmung erhöht werden kann.

Gelöst wird diese Aufgabe erfindungsgemäß durch ein Verfahren zur Bestimmung der Entfernung zwischen einer Basisstation und einer Mobilstation, bei dem die Basisstation einen Timing Advance (TA-)Wert und einen gefilterten Time of Arrival (TOA) Wert TOA' für die jeweilige Funkstrecke zur Mobilstation ermittelt, wobei zumindest der TOA'-Wert Nachkommastellen aufweist. Der ermittelte TOA'-Wert und der TA-Wert werden zu einem neuen TA Wert TA' addiert. Anschließend erfolgt die Bestimmung der aktuellen Entfernung zwischen der Mobilstation und der Basisstation aufgrund des TA'-Werts.

Im Gegensatz zum Stand der Technik erlaubt das erfindungsgemäße Verfahren die Bestimmung des Abstands zwischen Mobilstation und der jeweiligen Basisstation mit einer Genauigkeit von weniger als 554 Metern (GSM) und damit eine genauere Positionsbestimmung der Mobilstation. Im Gegensatz zum Stand der Technik werden auch Timing Advance Werte erzeugt, die nicht mehr ganzzahlig sind. Die Entfernung zwischen Mobilstation und Basisstation kann somit mit einer höheren Auflösung bestimmt werden.

Es ist denkbar, die Genauigkeit der Positionsbestimmung bekannter Verfahren, die den Timing Advance Wert in irgendeiner Form verwenden, mit dem erfindungsgemäßen Verfahren zu erhöhen.

Weiterhin ist das erfindungsgemäße Verfahren dazu geeignet, den Rechenaufwand bei der Positionsbestimmung zu reduzieren. Dies ist insbesondere dann der Fall, wenn mit einem bereits bekannten Verfahren mögliche Positionen der Mobilstation bestimmt werden müssen und die Bestimmung des Abstands zwischen Mobilstation und Basisstation gemäß dem erfindungsgemäßen Verfahren zur Einschränkung der möglichen Positionen herangezogen wird. Bei der Positionsbestimmung im Cell-ID Verfahren ist beispielsweise bekannt, in welcher Zelle sich die Mobilstation befindet. Ferner ist die Hauptstrahlrichtung und der Öffnungswinkel der Antenne der Basisstation bekannt. Diese Parameter geben die Richtung an, in der sich die Mobilstation befindet. Mit dem erfindungsgemäßen Verfahren kann der Abstand der Mobilstation von der Basisstation in dieser Richtung genau ermittelt werden.

Bei einer bevorzugten Verfahrensvariante werden die TOA-Werte mit Nachkommastellen bestimmt. Beispielsweise, jedoch nicht limitierend, kann dies dadurch erfolgen, dass eine Hüllkurve für die Kanalimpulsantwort bestimmt wird. Über diese Hüllkurve, zwei Abtastwerten der Kanalimpulsantwort und den bekannten Abstand T der Abtastwerte kann die Position der Abtastwerte und das Maximum der Kanalimpulsantwort berechnet werden. Wird als Hüllkurve beispielsweise die Funktion $\sin^2(x)$ gewählt, so ergibt sich folgendes:

$$y_1 = A * \sin^2(x_1)$$

$$y_2 = A * \sin^2(x_2) = A * \sin^2(x_1 - T)$$

Wobei $y_1$ der maximale Wert der abgetasteten Kanalimpulsantwort ($CIR_{max}$) ist und $y_2$ dem Kanalimpulsantwortwert links von $CIR_{max}$ entspricht und $x_1$, $x_2$ Abtastzeitpunkte sind. T ist der Abstand der Abtastzeitpunkte. Aus den o.g. Gleichungen lässt sich beispielsweise der Abtastzeitpunkt $x_2$ berechnen zu:

$$x_2 = \arctan\left(\frac{\sin(T)}{\left(\frac{y_1}{y_2}\right)^{\frac{1}{2}} - \cos(T)}\right)$$

Es kann der Abstand des Abtastzeitpunkts $x_2$ zu dem Maximum der Hüllkurve der Kanalimpulsantwort ermittelt werden. Dieser Abstand kann als Nachkommastelle zu dem zu $CIR_{max}(x_1)$ gehörigen ganzzahligen TOA Wert addiert werden, so dass ein TOA-Wert mit Nachkommastelle entsteht. Durch diese Maßnahme können Änderungen der Entfernung zwischen Mobilstation und Basisstation schneller erkannt werden.

Die Genauigkeit der Abstandsbestimmung wird vorteilhafterweise dadurch erhöht, dass alle gemessenen oder ermittelten Time of Arrival Werte innerhalb einer Measurement Reporting Time, die beispielsweise 480 ms lang sein kann, gesammelt werden und dann gefiltert, beispielsweise gemittelt, werden, um einen gefilterten TOA'-Wert zu erhalten.

Es ist auch denkbar, den gefilterten TOA' Wert vor der Addition zum TA-Wert zu runden oder die Nachkommastellen abzuschneiden. Die Rundung kann auf einen ganzzahligen Wert erfolgen oder auf eine bestimmte Nachkommastelle. Gleiches gilt für das Abschneiden von Nachkommastellen. So können beispielsweise nur TOA'-Werte in Schrittweiten von 0,5 oder 0,25 zugelassen werden. Bei einer Schrittweite von 0,5 ergeben sich folglich TA'-Werte von 0; 0,5; 1,0; 1,5 etc. In diesem Fall kann bei GSM aus einem TA'-Wert von 0 geschlossen werden, dass sich die Mobilstation in einer Entfernung zwischen 0 m und 277 m von der Basisstation befindet, während aus einem TA'- Wert von 0,5 geschlossen werden kann, dass sich die Mobilstation in einer Entfernung zwischen 278 m und 554 m von der Basisstation befindet.

Analog kann auch vorgesehen sein, den TA'-Wert zu runden oder die Nachkommastellen an einer bestimmten Stelle abzuschneiden.

Bei einer Verfahrensvariante ermitteln mindestens drei Basisstationen einen TOA'-Wert und einen TA'-Wert für die jeweilige Funkstrecke und übermitteln zumindest den TA'-Wert an ein Ortungszentrum, wo die Positionsbestimmung der Mobilstation mittels Trilateration erfolgt. Aufgrund der an das Ortungszentrum übermittelten TA'-Werte kann mit geeigneten Algorithmen die Entfernung der Mobilstation zu jeder Basisstation ermittelt werden. Im Idealfall, d.h. bei höchst genauer Messung der Entfernung, liefert der Schnittpunkt der Kreise mit dem jeweils ermittelten Abstand um die Basisstationen die Position der Mobilstation. Dabei ist es denkbar, zunächst die Abstandsbestimmung für eine Basisstation durchzuführen, danach die Mobilstation an die zweite Basisstation zu übergeben (handover), erneut eine Abstandsbestimmung für diese Basisstation durchzuführen und nach einer weiteren Übergabe der Mobilstation an die dritte Basisstation erneut eine Abstandsbestimmung durchzuführen. Werden mehr als drei Basisstationen für die Positionsbestimmung verwendet, so wiederholt sich dies für jede weitere Basisstation.

Bei einer Ausgestaltung des Verfahrens werden die von den mindestens drei Basisstationen ermittelten Werte zunächst in der Mobilstation gesammelt. Die gesammelten Werte können dann beispielsweise mittels SMS (short message service) an das Ortungszentrum für Mobilstationen übermittelt werden.

In einer weiteren Ausgestaltung des Verfahrens werden die von den mindestens drei Basisstationen ermittelten Werte zunächst an eine Basisstationssteuerung übermittelt. Die Basisstationen kommunizieren über eine Schnittstelle, z.B. eine Abis-Schnittstelle mit der Basisstationssteuerung. Diese bereits vorhandene Schnittstelle kann vorteilhafterweise für die Übermittlung der TA'-Werte verwendet werden.

In den Rahmen der Erfindung fällt auch eine Basisstation mit Mitteln zum Ermitteln eines gefilterten Time of Arrival Wertes TOA' und eines TA' -Wertes für die Funkstrecke zu einer Mobilstation.

Einer Basisstationssteuerung sind eine oder mehrere Basisstationen zugeordnet, wobei die Basisstationssteuerung Mittel zum Empfangen von von der(den) Basisstation(en) übermittelten Werten und Mittel zur Weiterleitung dieser Werte an ein Ortungszentrum für Mobilstationen aufweist. Dadurch wird eine effektive Kommunikation zwischen Basisstation und Ortungszentrum sicher gestellt.

In den Rahmen der Erfindung fällt weiterhin ein Ortungszentrum (Mobile Location Center), das Mittel zur Bestimmung der aktuellen Position einer Mobilstation aufgrund von übermittelten TA' Werten für Funkstrecken zwischen den Mobilstationen und mindestens drei Basisstationen aufweist. Mit einem derart ausgebildeten Ortungszentrum kann der Abstand zwischen einer Mobilstation und einer Basisstation genauer ermittelt werden und die Position der Mobilstation akkurater bestimmt werden. Es kann auch vorgesehen sein, dass zusätzlich zu den TA'-Werten TOA'-Werte übermittelt werden. Alternativ kann vorgesehen sein, dass die TOA'-Werte und TA-Werte übermittelt werden und im Ortungszentrum Mittel zum Berechnen der TA'-Werte vorgesehen sind.

Der Erfindungsgedanke umfasst außerdem ein Mobilfunknetz mit einer Mobilstation und einer Basisstation zur Durchführung des beschriebenen Verfahrens zur Bestimmung der Entfernung der Basisstation zur Mobilstation. In einem solchen Mobilfunknetz können im Stand der Technik bekannte Verfahren zur Positionsbestimmung einer Mobilstation für eine Grobbestimmung der Position Verwendung finden. Das erfindungsgemäße Mobilfunknetz weist darüber hinaus Mittel auf, die eine Feinbestimmung der Position der Mobilstation gemäß dem genannten erfindungsgemäßen Verfahren ermöglichen.

Vorzugsweise weist das Mobilfunknetz mindestens eine Basisstationssteuerung und/oder ein Ortungszentrum auf. Diese Maßnahme ermöglicht eine effektive Durchführung des erfindungsgemäßen Verfahrens.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

Die einzige Figur zeigt die schematische Anordnung eines Mobilfunknetzes.

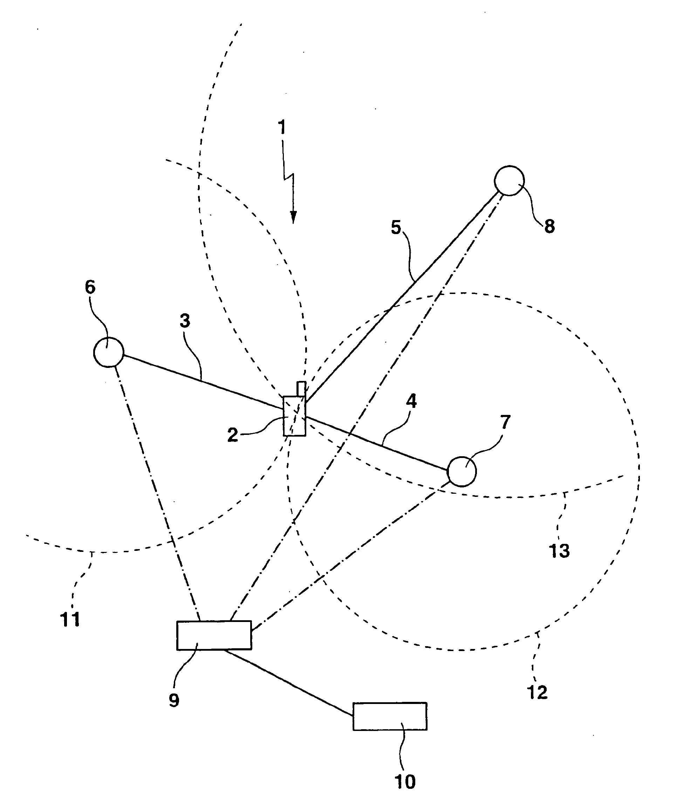

In der Fig. 1 ist ein Teil eines Mobilfunknetzes **1** schematisch dargestellt. Eine Mobilstation **2** unterhält gleichzeitig oder nacheinander eine Funkverbindung 3 -

**5** zu Basisstationen **6 - 8.** In jeder Basisstation 6 - 8 wird der Timing Advance (TA) Wert für die entsprechende Funkverbindung 3 - 5 ermittelt. Aus dem ermittelten TA Wert lässt sich die Entfernung der Mobilstation 2 bis auf etwa 554 m genau bestimmen. Die Basisstationen 6 - 8 weisen einen nicht dargestellten Empfänger auf, mit dem die Basisstationen 6 - 8 Signale der Mobilstation empfangen. Für jeden empfangenen Zeitschlitz (burst) ermitteln die Basisstationen 6 - 8 den Time of Arrival (TOA) Wert. Innerhalb einer Measurement Reporting Time werden die TOA Werte gefiltert. Aus dem gefilterte TOA Wert TOA' jeder Basisstation 6 - 8 wird in jeder Basisstation 6 - 8 ein Wert TA' mit Nachkommastellen bestimmt. Diese werden dem Ortungszentrum für Mobilstationen **10**, gegebenenfalls unter Zwischenschaltung einer Basisstationssteuerung 9, geeignet zugeführt. Im Ortungszentrum 10 wird aufgrund der TA' Werte eine genaue Abstandsberechnung der Mobilstation 2 zu den Basisstationen 6 - 8 durchgeführt.

Die Position der Mobilstation 2 wird durch eine Trilateration bestimmt. Im dargestellten Beispiel wird um jede Basisstation 6 - 8 ein Kreisbogen **11 - 13** gelegt, dessen Radius dem im Ortungszentrum ermittelten Abstand der Mobilstation 2 zu der jeweiligen Basisstation 6 - 8 entspricht. Im Idealfall wird durch den Schnittpunkt dieser Kreisbögen 11- 13 die Position der Mobilstation 2 bestimmt. Realistisch schneiden sich die Kreisbögen 11 - 13 nicht genau in einem Punkt. Die Kreisbögen 11 - 13 schließen jedoch einen Bereich ein, in dem sich die Mobilstation 2 befindet.

**Patentansprüche**

1. Verfahren zur Bestimmung der Entfernung zwischen einer Basisstation (6 - 8) und einer Mobilstation (2) eines Mobilfunknetzes,
   wobei ein Timing Advance Wert, TA-Wert, einer Funkverbindung zwischen einer Mobilstation (2) und einer Basisstation (6 - 8) des Mobilfunknetzes bestimmt wird, um der Mobilstation (2) mitzuteilen, zu welchem Zeitpunkt sie mit dem Senden ihres Zeitschlitzes beginnen soll, und
   ein Empfänger in der Basisstation (6 - 8) Signale von der Mobilstation (2) empfängt und für jeden empfangenen Zeitschlitz einen Time of Arrival Wert, TOA-Wert, bestimmt, wobei der TOA-Wert ein relativer zeitlicher Wert ist, der die Position einer bekannten Trainingssequenz innerhalb des Zeitschlitzes angibt, **gekennzeichnet durch** die folgenden Schritte:

   a) Die Basisstation (6 - 8) ermittelt einen Timing Advance Wert, TA-Wert, und einen gefilterten Time of Arrival Wert, TOA'-Wert, für die entsprechende Funkstrecke (3- 5) zur Mobilstation (2), wobei zumindest der TOA'-Wert Nachkommastellen aufweist und wobei alle TOA-Werte innerhalb einer Measurement Reporting Time gesammelt werden und dann gefiltert, insbesondere gemittelt, werden, um einen gefilterten TOA'-Wert zu erhalten;

b) Addition des TOA'-Werts und des TA-Werts zu einem neuen TA Wert TA';

c) Bestimmung der aktuellen Entfernung zwischen der Mobilstation (2) und der Basisstation (6 - 8) aufgrund des TA'-Werts.

2. Verfahren nach Anspruch 1, **dadurch gekennzeichnet, dass** die TOA-Werte mit Nachkommastellen bestimmt werden.

3. Verfahren nach Anspruch 1, **dadurch gekennzeichnet, dass** der gefilterte TOA' Wert vor Schritt b) gerundet wird oder die Nachkommastellen abgeschnitten werden.

4. Verfahren nach Anspruch 1, **dadurch gekennzeichnet, dass** der TA' Wert nach Schritt b) gerundet wird oder die Nachkommastellen abgeschnitten werden.

5. Verfahren nach Anspruch 1, **dadurch gekennzeichnet, dass** zumindest der TA'-Wert an ein Ortungszentrum (10) für Mobilstationen, Mobile Location Center, übermittelt wird, wo die Position der Mobilstation (2) aufgrund dieses Wertes bestimmt wird.

6. Verfahren nach Anspruch 1, **dadurch gekennzeichnet, dass** mindestens drei Basisstationen (6 - 8) einen TOA'-Wert und einen TA'-Wert für die jeweilige Funkstrecke (3 - 5) ermitteln und zumindest den TA'-Wert an ein Ortungszentrum (10) für Mobilstationen, Mobile Location Center, übermitteln und dass dort die Positionsbestimmung der Mobilstation (2) mittels Trilateration erfolgt.

7. Verfahren nach Anspruch 6, **dadurch gekennzeichnet, dass** die von den mindestens drei Basisstationen (6 - 8) ermittelten Werte zunächst an eine Basisstationssteuerung (9) übermittelt werden.

8. Basisstation (6 - 8) eines Mobilfunknetzes mit Mitteln zur Bestimmung eines Timing Advance Wertes, TA-Wert, einer Funkverbindung zwischen einer Mobilstation (2) und der Basisstation (6 - 8) des Mobilfunknetzes, wobei der TA-Wert bestimmt wird, um der Mobilstation (2) mitzuteilen, zu welchem Zeitpunkt sie mit dem Senden ihres Zeitschlitzes beginnen soll,

mit einem Empfänger zum Empfangen von Signalen von der Mobilstation (2) und

Mitteln zum Bestimmen eines Time of Arrival Wertes, TOA-Wert, für jeden empfangenen Zeitschlitz, wobei der TOA-Wert ein relativer zeitlicher Wert ist, der die Position einer bekannten Trainingssequenz innerhalb des Zeitschlitzes angibt,

wobei die Basisstation **gekennzeichnet ist durch**:

Mittel zum Ermitteln eines gefilterten TOA-Wertes TOA' mit Nachkommastellen **durch** Filtern der TOA-Werte innerhalb einer Measurement Reporting Time, und

Mittel zum Ermitteln eines TA'-Wertes für die Funkstrecke (3 - 5) zu der Mobilstation (2) **durch** Addition des TOA'-Werts und des TA-Werts zu einem neuen TA Wert TA'.

9. Ortungszentrum (10) für Mobilstationen, Mobile Location Center, in einem Mobilfunknetz, wobei ein Timing Advance Wert, TA-Wert, einer Funkverbindung zwischen einer Mobilstation (2) und einer Basisstation (6 - 8) des Mobilfunknetzes bestimmt wird, um der Mobilstation (2) mitzuteilen, zu welchem Zeitpunkt sie mit dem Senden ihres Zeitschlitzes beginnen soll, und ein Empfänger in der Basisstation (6 - 8) Signale von der Mobilstation (2) empfängt und für jeden empfangenen Zeitschlitz einen Time of Arrival Wert, TOA-Wert, bestimmt, wobei der TOA-Wert ein relativer zeitlicher Wert ist, der die Position einer bekannten Trainingssequenz innerhalb des Zeitschlitzes angibt,

**gekennzeichnet durch**

Mittel zur Bestimmung der aktuellen Position der Mobilstation (2) aufgrund von übermittelten TA'-Werten für Funkstrecken (3 - 5) zwischen der Mobilstation (2) und mindestens drei Basisstationen (6 - 8), wobei die Basisstation (6 - 8) einen Timing Advance Wert, TA-Wert, und einen gefilterten Time of Arrival Wert, TOA'-Wert, für die entsprechende Funkstrecke (3 - 5) zur Mobilstation (2), **durch** Filtern der TOA-Werte innerhalb einer Measurement Reporting Time, ermittelt, wobei zumindest der TOA'-Wert Nachkommastellen aufweist; und der TOA'-Wert und der TA-Wert zu einem neuen TA Wert TA' addiert werden.

10. Mobilfunknetz (1), umfassend eine Basisstation (6-8) nach Anspruch 8 sowie eine Mobilstation (2).

11. Mobilfunknetz (1) nach Anspruch 10, weiter umfassend ein Ortungszentrum (10) nach Anspruch 9.

**Claims**

1. Method to determine the distance between a base station (6-8) and a mobile station (2) of a mobile radio network,

whereby a Timing Advance value, TA value, of a radio connection between a mobile station (2) and a base station (6-8) of the mobile network is determined in order to inform the mobile station (2) of the time at which it should start transmitting its time slot, and

a receiver in the base station (6-8) receives signals from the mobile station (2) and determines a Time of Arrival value, TOA value, for each received time slot, whereby the TOA value is a relative time value which indicates the position of a known training sequence within the time slot, **characterised by** the following steps:

   a) the base station (6-8) determines a Timing Advance value, TA value, and a filtered Time of Arrival value, TOA' value, for the corresponding radio link (3-5) to the mobile station (2), whereby at least the TOA' value has places after the decimal point and whereby all TOA values within a Measurement Reporting Time are collected and then filtered, and in particular averaged, in order to obtain a filtered TOA' value;
   b) the addition of the TOA' value and the TA value to produce a new TA value TA';
   c) the determination of the actual distance between the mobile station (2) and the base station (6-8) on the basis of the TA' value.

2. Method according to Claim 1, **characterised in that** the TOA values are determined with places after the decimal point.

3. Method according to Claim 1, **characterised in that** the filtered TOA' value is rounded off before step b) or the places after the decimal point are cut off.

4. Method according to Claim 1, **characterised in that** the TA' value is rounded off after step b) or the places after the decimal point are cut off.

5. Method according to Claim 1, **characterised i**n that at least the TA' value is forwarded to a locating centre (10) for mobile stations, Mobile Location Centre, where the position of the mobile station (2) is determined on the basis of this value.

6. Method according to Claim 1, **characterised in that** at least three base stations (6-8) determine a TOA' value and a TA' value for the relevant radio link (3-5) and forward at least the TA' value to a locating centre (10) for mobile stations, Mobile Location Centre, and that the position of the mobile station (2) is determined there by trilateration.

7. Method according to Claim 6, **characterised in that** the values determined by the at least three base stations (6-8) are forwarded initially to a base station control (9).

8. Base station (6-8) of a mobile radio network with means for determining a Timing Advance value, TA value, of a radio link between a mobile station (2) and the base station (6-8) of the mobile radio network, whereby the TA value is determined in order to inform the mobile station (2) of the time at which it is to begin transmitting its time slot,
with a receiver for receiving stations from the mobile station (2)
and
means for determining a Time of Arrival value, TOA value, for each received time slot, whereby the TOA value is a relative time value, which indicates the position of a known training sequence within the time slot,
whereby the base station is **characterised by**:

   means for determining a filtered TOA value, TOA', with places after the decimal point through filtering the TOA values within a Measurement Reporting Time and
   means for determining a TA' value for the radio link (3-5) to the mobile station (2) by addition of the TOA' value and the TA value to create a new TA value TA'.

9. Locating centre (10) for mobile stations, Mobile Location Centre, in a mobile radio network, whereby a Timing Advance value, TA value, of a radio link between a mobile station (2) and a base station (6-8) of the mobile radio network is determined in order to inform the mobile station (2) of the time at which it is to start transmitting its time slot, and a receiver in the base station (6-8) receives signals from the mobile station (2) and determines a Time of Arrival value, TOA value, for each received time slot, whereby the TOA value is a relative time value which indicates the position of a known training sequence within the time slot,
**characterised by**
means for determining the current position of the mobile station (2) on the basis of forwarded TA' values for radio links (3-5) between the mobile station (2) and at least three base stations (6-8), whereby the base station (6-8) determines a Timing Advance value, TA value, and a filtered Time of Arrival value. TOA' value, for the corresponding radio link (3-5) to the mobile station (2) by filtering the TOA values within a Measurement Reporting Time, whereby at least the TOA' value has places after the decimal point; and the TOA' value and the TA value are added to create a new TA value, TA'.

10. Mobile radio network (1), comprising a base station (6-8) according to Claim 8 and a mobile station (2).

11. Mobile radio network (1) according to Claim 10, further comprising a locating centre (10) according to Claim 9.

## Revendications

1. Procédé pour déterminer la distance entre une station de base (6 - 8) et une station mobile (2) d'un réseau de radiocommunication mobile, une valeur d'avance de temporisation, valeur TA, d'une liaison radioélectrique étant déterminée entre un station mobile (2) et une station de base (6 - 8) du réseau de radiocommunication mobile afin de communiquer à la station mobile (2) le moment auquel elle doit commencer l'émission de son créneau temporel et un récepteur dans la station de base (6 - 8) recevant des signaux de la station mobile (2) et déterminant pour chaque créneau temporel reçu une valeur de l'instant d'arrivée, valeur TOA, la valeur TOA étant une valeur de temps relative qui indique la position d'une séquence d'apprentissage connue à l'intérieur du créneau temporel, **caractérisé par** les étapes suivantes :

   a) La station de base (6 - 8) détermine une valeur d'avance de temporisation, valeur TA, et une valeur de l'instant d'arrivée filtrée, valeur TOA', pour le trajet radioélectrique (3 - 5) correspondant vers la station de base (2), au moins la valeur TOA' présentant des décimales et toutes les valeurs TOA étant regroupées au sein d'un temps de compte-rendu de mesure et ensuite filtrées, notamment moyennisées, afin d'obtenir une valeur TOA' filtrée ;
   b) Addition de la valeur TOA' et de la valeur TA pour obtenir une nouvelle valeur TA TA' ;
   c) Détermination de la distance actuelle entre la station mobile (2) et la station de base (6 - 8) en se basant sur la valeur TA'.

2. Procédé selon la revendication 1, **caractérisé en ce que** les valeurs TOA sont déterminées avec des décimales.

3. Procédé selon la revendication 1, **caractérisé en ce que** la valeur TOA' filtrée est arrondie avant l'étape b) ou les décimales sont supprimées.

4. Procédé selon la revendication 1, **caractérisé en ce que** la valeur TA' est arrondie après l'étape b) ou les décimales sont supprimées.

5. Procédé selon la revendication 1, **caractérisé en ce qu'**au moins la valeur TA' est communiquée à un centre de localisation (10) pour les stations mobiles (Mobile Location Center) où est déterminée la position de la station mobile (2) en se basant sur cette valeur.

6. Procédé selon la revendication 1, **caractérisé en ce qu'**au moins trois stations de base (6 - 8) déterminent une valeur TOA' et une valeur TA' pour le trajet radioélectrique (3 - 5) correspondant et communiquent au moins la valeur TA' à un centre de localisation (10) et que la détermination de la position de la station mobile (2) y est effectuée au moyen d'une trilatération.

7. Procédé selon la revendication 6, **caractérisé en ce que** les valeurs déterminées par les au moins trois stations de base (6 - 8) sont tout d'abord communiquées à une commande de station de base (9).

8. Station de base (6 - 8) d'un réseau de radiocommunication mobile comprenant des moyens pour déterminer une valeur d'avance de temporisation, valeur TA, d'une liaison radioélectrique entre une station mobile (2) et la station de base (6 - 8) du réseau de radiocommunication mobile, la valeur TA étant déterminée pour communiquer à la station mobile (2) le moment auquel elle doit commencer l'émission de son créneau temporel, comprenant un récepteur pour recevoir des signaux de la station mobile (2) et des moyens pour déterminer une valeur de l'instant d'arrivée, valeur TOA, pour chaque créneau temporel reçu, la valeur TOA étant une valeur de temps relative qui indique la position d'une séquence d'apprentissage connue à l'intérieur du créneau temporel, la station de base étant **caractérisée par** :

   des moyens pour déterminer une valeur TOA filtrée TOA' avec des décimales par filtrage des valeurs TOA au sein d'un temps de compte-rendu de mesure et
   des moyens pour obtenir une valeur TA' pour le trajet radioélectrique (3 - 5) vers la station mobile en additionnant la valeur TOA' et la valeur TA pour obtenir une nouvelle valeur TA TA'.

9. Centre de localisation (10) pour stations mobiles (Mobile Location Center) dans un réseau de radiocommunication mobile, une valeur d'avance de temporisation, valeur TA, d'une liaison radioélectrique entre une station mobile (2) et la station de base (6 - 8) du réseau de radiocommunication mobile étant déterminée pour communiquer à la station mobile (2) le moment auquel elle doit commencer l'émission de son créneau temporel, et un récepteur dans la station de base (6 - 8) recevant des signaux de la station mobile (2) et déterminant pour chaque créneau temporel reçu une valeur de l'instant d'arrivée, valeur TOA, la valeur TOA étant une valeur de temps relative qui indique la position d'une séquence d'apprentissage connue à l'intérieur du créneau temporel, **caractérisé par** :

   des moyens pour déterminer la position actuelle de la station mobile (2) en se basant sur les valeurs TA' déterminées pour les trajets radioélectriques (3 - 5) entre la station mobile (2) et au moins trois stations de base (6 - 8), la station de base (6 - 8) déterminant une valeur de l'instant d'arrivée filtrée, valeur TOA', pour le trajet radioélectrique (3 - 5) correspondant vers la station mobile (2) par filtrage des valeurs TOA au sein d'un temps de compte-rendu de mesure, au moins la valeur TOA' présentant des décimales, et la valeur TOA' ainsi que la valeur TA étant additionnées pour obtenir une nouvelle valeur TA TA'.

**10.** Réseau de radiocommunication mobile (1) comprenant une station de base (6 - 8) selon la revendication 8 ainsi qu'une station mobile (2).

**11.** Réseau de radiocommunication mobile (1) selon la revendication 10, comprenant un centre de localisation (10) selon la revendication 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9939539 A1